Europäisches Patentamt

(19) European Patent Office

Office européen des brevets

(11) Veröffentlichungsnummer: **0 015 006**
**B1**

(12) **EUROPÄISCHE PATENTSCHRIFT**

(45) Veröffentlichungstag der Patentschrift:
**30.05.84**

(51) Int. Cl.³: **C 01 B 25/00**, B 01 J 19/00

(21) Anmeldenummer: **80100893.9**

(22) Anmeldetag: **22.02.80**

(54) Verfahren zur Kondensation von Feststoffen sowie Vorrichtung zur Durchführung des Verfahrens.

(30) Priorität: **26.02.79 DE 2907453**

(43) Veröffentlichungstag der Anmeldung:
**03.09.80 Patentblatt 80/18**

(45) Bekanntmachung des Hinweises auf die Patenterteilung:
**30.05.84 Patentblatt 84/22**

(84) Benannte Vertragsstaaten:
**AT BE CH DE FR GB IT LU NL SE**

(56) Entgegenhaltungen:
**DE - C - 764 763**
**DE - C - 818 801**
**DE - C - 972 118**
**US - A - 3 953 443**

(73) Patentinhaber: **Benckiser-Knapsack GmbH, Dr. Albert-Reimann-Strasse 2, D-6802 Ladenburg (DE)**

(72) Erfinder: **Sommer, Klaus, Dr. Dipl.-Chem., Sandwingert 39, D-6900 Heidelberg 1 (DE)**
Erfinder: **Klemm, Walter, Dipl.-Ing., Im Grund 2, D-6940 Weinheim Ortsteil Rippenweier (DE)**
Erfinder: **Weber, Hermann, Dr. Dipl.-Chem., Schlossstrasse 43, D-6944 Hemsbach (DE)**
Erfinder: **Meinhardt, Friedrich, Ing.grad., Lessingstrasse 9, D-6701 Birkenheide (DE)**
Erfinder: **Schönmann, Gerhard, Ing.grad, Hilgundstrasse 33, D-6700 Ludwigshafen (DE)**
Erfinder: **Spatz, Wilhelm, Chem.Ing.grad., Talstrasse 125, D-6101 Ober-Kainsbach (DE)**

(74) Vertreter: **Patentanwälte Zellentin, Zweibrückenstrasse 15, D-8000 München 2 (DE)**

## Beschreibung

Gegenstand der vorliegenden Erfindung ist ein Verfahren zur Kondensation von Feststoffen, mit Ausnahme von Cyanursäuren, insbesondere von Phosphaten, die während der Kondensation zum Sintern und/oder Verkleben neigen in einem Reaktor unter Wärmezufuhr von aussen.

Derartige Verfahren sind die Kondensation von sauren Alkali-, Erdalkali- und Metall-monophosphaten oder Ammonium-Metallmonosphaten zu den entsprechenden Polyphosphaten, z.B. die Kondensation von Monoatriummonophosphat zu Dinatrium-diphosphat und weiter zu Maddrellschem Salz oder Trimetaphosphat, von Dinatriummonophosphat zu Tetranatrium-diphosphat, von Lithiummonophosphaten zu den entsprechenden Di- und Polyphosphaten, von Monocalcium- und Monomagnesium-monophosphaten über die Diphosphate zu den entsprechenden Polyphosphaten.

Als Beispiele für die Umsetzung von Metallmonophosphaten wären zu nennen:
Die Herstellung von Aluminium-tripoly-phosphat bzw. Aluminium-metaphosphat aus Aluminiummonophosphat sowie die Kondensation von Zink-, Mangan- oder Kupfer-diphosphat aus den entsprechenden Monophosphaten.

Weitere Beispiele sind die Gewinnung von Borphosphat durch Kondensation von Borsäure mit Ammonium-phosphat sowie die Bildung von Ammonium-polyphosphat aus Harnstoffphosphat oder die Herstellung von Melamin-polyphosphaten. -

Bei der Kondensation von Harnstoffen zu Cyanursäuren und bei der Bildung von Phosphor-nitridoxid bzw. Phosphor-nitridsulfid bereitet das Verkleben der Produkte beträchtliche Schwierigkeiten, die darin bestehen, dass das an den Reaktorwänden anhaftende Endprodukt die Wärmeübertragung erschwert und so der Umsatzgrad entscheidend beeinflusst wird.

Aus der US-A-3953443 ist ein Verfahren zu Kondensation von Harnstoffen zu Cyanursäure bekannt. In dieser Schrift ist beschrieben, dass sich normalerweise an der Reaktorwand eine Schicht bildet, die umgehend entfernt werden muss, wenn sich nicht eine die Wärmeübertragung behindernde Dampfschicht zwischen der Schicht und der Reaktorwand bilden soll. In dieser Druckschrift wird zur Vermeidung der Schichtbildung vorgeschlagen, ein bestimmtes Temperaturregime einzuhalten.

Aus der DE-A-1542016 ist ein Verfahren und eine Vorrichtung zur Durchführung von Hochtemperaturprozessen bei Temperaturen über 300°C bekannt, bei dem in einer Schneckenmaschine mit einer oder mehreren Schneckenwellen das Ausgangsprodukt zunächst überwiegend durch mechanische innere Reibungsarbeit soweit erwärmt wird, dass es über einen zähpastösen Zustand in eine weniger viskose Masse übergeführt wird, der dann von aussen durch direkte Wärmeübertragung die erforderliche Wärme zugeführt wird. Solche Einrichtungen sind zur Durchführung von Kondensationsreaktionen im Prinzip ungeeignet, weil der Mischeffekt zu gering ist und somit die Umsetzung nicht vollständig abläuft.

Des weiteren sind aus DE-A-1557119 und DE-A-2012294 Mischmaschinen bekannt, die ein zylindrisches oder trogförmiges Gehäuse aufweisen, das mit Rührwerken sowie Knetbarren und/oder scheibenförmigen Mischelementen ausgestattet ist. In den genannten Mischmaschinen lassen sich nur solche Verfahren durchführen, bei denen eine Temperatur von etwa 350°C nicht überschritten wird.

Im Gegensatz hierzu gelingt es nach dem erfindungsgemässen Verfahren und mit Hilfe der erfindungsgemässen Vorrichtung Kondensationen bei Temperaturen bis etwa 700°C durchzuführen.

Nach dem erfindungsgemässen Verfahren wird in der ersten Phase das im Reaktorgehäuse befindliche gemischte Material in dünner Schicht an die beheizte Reaktorgehäusewand angedrückt und nachfolgend das aufgeheizte und teilkondensierte Material von den Wänden des Reaktors abgeschabt und mit dem im Innern des Reaktors befindlichen Produkt vermischt.

Vorzugsweise wird die Wärme mittels einer Schmelze durch die Reaktorwandung der kondensierten Schicht und durch Abschälen der kondensierten Schicht dem Innern des Reaktors zugeführt, wobei man als Wärmeüberträger eine Salzschmelze oder Metallschmelze verwendet.

Wird zur Durchführung des Verfahrens ein Reaktor verwandt, der mit mehreren Heiztaschen ausgerüstet ist, führt man vorzugsweise über die Länge des Reaktors unterschiedliche Wärmemengen zu.

Die bei der Kondensation sich bildenden Reaktionsabgase werden vorteilhafterweise abgesaugt und mit Luft verdünnt, wobei das in den Abgasen mitgerissene Reaktionsprodukt abgeschieden und gegebenenfalls in den Reaktor zurückgeführt wird.

Eine bevorzugte Vorrichtung zur Durchführung des Verfahrens bestehend aus einem beheizten Reaktorgehäuse mit innenliegendem sternförmigen Mischwerkzeug mit Paddeln ist dadurch gekennzeichnet, dass mindestens ein Paddel durch ein Schälmesser ersetzt ist, das in geringem Abstand von der Reaktorgehäusewand angeordnet ist.

Vorzugsweise Ausgestaltungen sind den Unteransprüchen 7 bis 10 zu entnehmen.

Nachstehend wird die Erfindung unter Bezug auf Zeichnungen näher erläutert. Es zeigen:

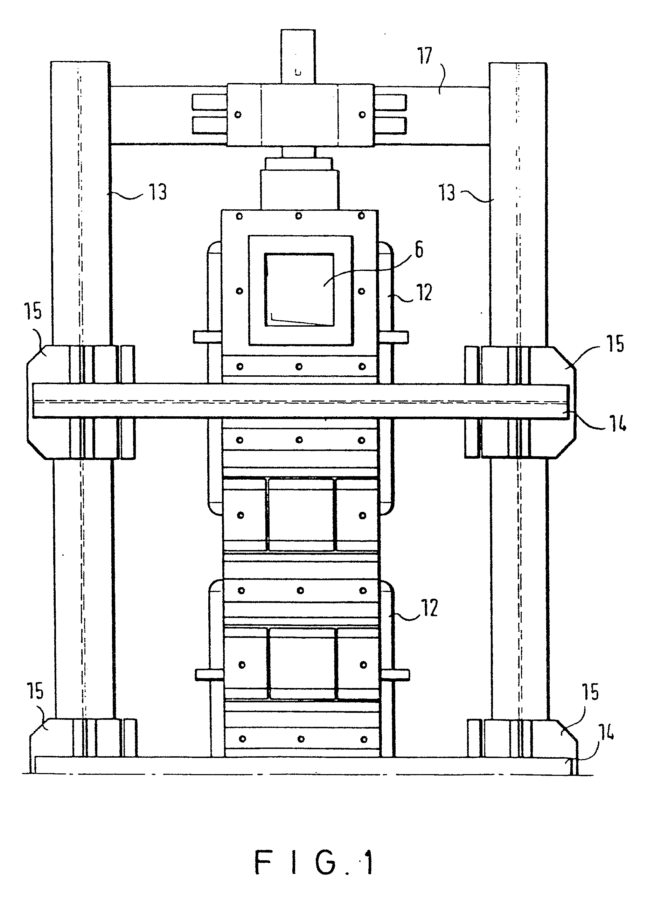

Fig. 1 eine Draufsicht eines Teils des erfindungsgemässen Reaktors,

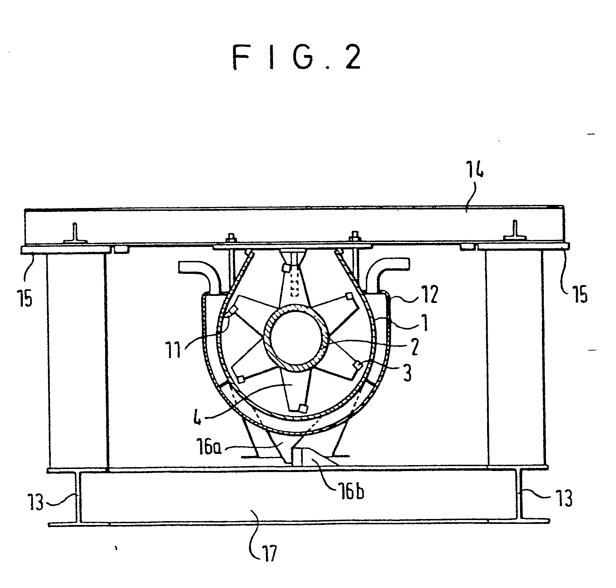

Fig. 2 einen Querschnitt durch den erfindungsgemässen Reaktor gemäss Fig. 1, und

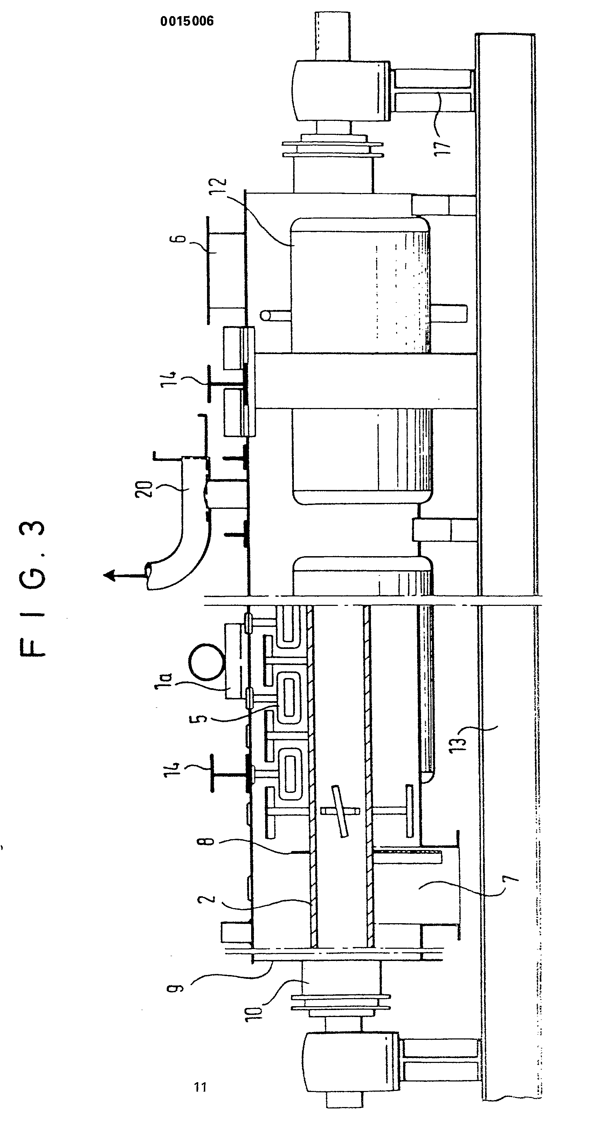

Fig.3 eine Längsansicht, teilweise im Schnitt, des erfindungsgemässen Reaktors von Fig. 1.

Zur Durchführung des erfindunsgemässen Verfahrens bedient man sich einer Vorrichtung, die aus einem Reaktorgehäuse 1 besteht, das trogförmig ausgebildet ist und an Querträgern 14 in Längsrichtung frei beweglich aufgehängt ist, wobei sich die Querträger 14 über Gleitlager 15 auf Längsträgern 13 abstützen.

In dem Reaktorgehäuse befindet sich eine rotierende Welle 2, auf der in mehreren Ebenen Paddeln 3 auf Paddelträgern 4 befestigt sind. Die Paddeln 3 sind zur Wellenachse schräg angeordnet und bewerkstelligen dadurch den axialen Transport des Produktes. Die obere Seite des Reaktorgehäuses ist mit Deckeln 1a versehen, an denen zwischen je zwei Paddelebenen ein Abstreifbügel 5 befestigt ist, der die Welle und die Paddelträger von anhaftendem Produkt reinigt.

Zur Einbringung der Reaktionskomponenten ist der Einlauf 6 vorgesehen, der Auslauf 7 dient zur Austragung des Reaktionsproduktes.

Die Abdichtung der Welle 2 zu den stirnseitigen Gehäusedeckeln 9 erfolgt durch die Stopfbüchsen 10.

In jeder Paddelebene ist ein Paddel mit aufgesetztem Messer 11 angeordnet, mit dem die kondensierte Schicht von der Reaktorwandung abgeschält wird. So wird ein optimaler Wärmeübergang von der Heizfläche an das Produkt ermöglicht. Die Paddelmesser 11 sind so ausgebildet, dass für den Reinigungsvorgang durch Schälwirkung und Schneide-Effekt nur ein minimaler Energieaufwand erforderlich wird.

Am Reaktorgehäuse 1 sind mehrteilige Heiztaschen 12 angebracht, die so ausgebildet sind, dass sie mit Heizmedien verschiedener Temperatur beaufschlagt werden können. Auch sind sie in der Lage, die Unterschiede der Wärmedehnungen des Reaktorgehäuses einerseits und der Heiztaschenwände andererseits zu kompensieren.

Zur Aufnahme der Torsionskräfte des Reakorgehäuses sind an der Unterseite des Gehäuses Widerlager 16 angeordnet, bestehend aus 2 Teilen 16a, b, deren eines 16a am Gehäuse und deren anderes 16b an der Tragkonstruktion 17 befestigt ist, wobei die beiden Teile 16a und 16b in Längsrichtung gegeneinander verschiebbar sind. Bei der praktischen Durchführung des Verfahrens wird die zu kondensierende Substanz über den Einfüllstutzen 6 in den Reaktor mittels Eintragsschnecke, Förderband oder Zellenradschleuse eingebracht. Dabei ist zu beachten, dass das Füllniveau des Reaktors dem jeweiligen Produkt entsprechend optimal genutzt wird. So ist es z. B. sinnvoll, bei stark zum Schäumen neigenden Produkten eine Füllhöhe anzustreben, die nur wenig über die Welle 2 hinausreicht. Die Regulierung der Füllhöhe erfolgt über ein vor dem Austrag angebrachtes Stauwehr 8 und durch Variation der Drehzahl der Welle 2 bzw. durch Variieren der Paddelneigung. Das im Reaktorgehäuse befindliche Material wird mittels der Paddeln in der ersten Phase an die von aussen mit Schmelzsalz beheizte Reaktorgehäusewand in dünner Schicht angedrückt.

Durch das in der jeweiligen Paddelebene nachfolgende Schälmesser wird das aufgeheizte und teilkondensierte Material von den Wänden des Reaktors abgeschabt und mit dem im Innern des Reaktors befindlichen Produkt vermischt, wobei gleichzeitig eine Wärmeübertragung von der beheizten Reaktorwand durch das abgeschälte Material in das Innere erfolgt.

Die Produkteintragsmenge wird dabei so bemessen, dass sich dieser Vorgang so lange wiederholt, bis das Reaktionsprodukt, das sich im letzten Teil vor dem Austrag befindet, die Reaktionstemperatur aufweist, bei der die Kondensation vollständig abgelaufen ist. Das so erhaltene Endprodukt wird über das Stauwehr 8 zu dem Auslauf 7 gefördert und dort ausgetragen.

Bei der Durchführung solcher Reaktionen, bei denen die Temperatur im Reaktionsverlauf variabel sein soll, ist zur Einstellung des Temperaturgradienten der Heizmantel in Sektoren, sogenannte Heiztaschen, unterteilt, die mit Heizmedien verschiedener Temperatur beaufschlagt werden können.

Beispiel 1

Ein erfindungsgemässer Reaktor mit einer Troglänge von 320 cm wird in einer Stunde mit 70 bis 75 kg einer Mischung aus 98,8 Gewichtsteilen kristallisiertem oder sprühgetrocknetem Mononatrium-phosphat und 1,2 Gewichtsteilen Monoammonium-phosphat beschickt. Eine 1prozentige Lösung des Mononatrium-phosphats sollte einen pH von 4,5 aufweisen. Wird die Produkttemperatur am Austragstutzen bei 355 bis 360° C gehalten, was eine Salzschmelzen-Temperatur von 450 bis 470° C erfordert, so erhält man ein Natriumpolyphosphat mit einem Gehalt von mindestens 98,5 % Maddrellschem Salz. Eine Leistung von 300 bis 320 kg/h erreicht man mit einem Reaktor, dessen Trog eine Länge von 600 cm und einen Durchmesser von 70 cm besitzt.

Beispiel 2

In einem Mischer werden 100 Gewichtsteile Mononatrium-phosphat mit 1,5 Gewichtsteilen Natriumcarbonat gut vermischt. Über eine Dosierrinne und eine Eintragsschnecke oder eine Zellradschleuse wird diese Vormischung kontinuierlich mit einer Leistung von 60 kg/h in einem erfindungsgemässen Reaktor mit einer Troglänge von 320 cm eingetragen. Bei Salzschmelztemperaturen von 470 bis 520° C stellen sich Produkttemperaturen zwischen 380 und 440° C ein. Man erhält ein Natriumtrimetaphosphat, das zwischen 0,5 und 2 % wasserunlösliche Bestandteile enthält, gemessen in 5prozentiger Aufschlämmung. Daneben konnten noch Spuren Pentanatrium-tripolyphosphat nachgewiesen werden.

Beispiel 3

Der oben beschriebene Reaktor wird über eine Dosiereinrichtung, z. B. Dosierbandwaage, mit 30,6 kg Calciumhydroxid und über eine Sprüheinrichtung oberhalb der Kneterwelle mit 66 Liter 75prozentiger Phosphorsäure pro Stunde beschickt. Mit einer Salzschmelzen-Temperatur von 520° C stellt sich am Austrag des Reaktors eine Produkttemperatur von 280 bis 290° C ein. Man erhält ein Calciumpyrophosphat mit einer Stundenleistung von 90 kg, das einen Glühverlust von 8,8 % zeigte.

## Beispiel 4

Ein Laborrreaktor oben beschriebener Ausführrung mit einer Troglänge von 80 cm und einem Trogdurchmesser von 18 cm wird bei 150°C mit 10 kg Monolithiumorthophosphat beschickt. Nach Erhöhen der Temperatur des Heizmediums auf 400 bis 420°C werden über eine Dosierpumpe stündlich 6 bis 7 kg einer Lithiumorthophosphat-Lösung, die man sich aus Lithiumhydroxid und 75prozentiger Phosphorsäure bereitet hat, über ein Düsenrohr in den vorderen Teil des Reaktors eingetragen. Das gebildete, in Wasser schwerlösliche Lithiumpolyphosphat verlässt als rieselfähiges Produkt den Reaktor mit einer Temperatur von 320 bis 350°C.

## Beispiel 5

Unter Feuchtigkeitsausschluss wird eine Mischung aus 44,6% Dicyandiamid, 3,7% Phosphorpentoxid und 17,7% Harnstoff hergestellt. Man beschickt die in Beispiel 1 beschriebene Reaktoranlage unter Feuchtigkeitsausschluss stündlich mit 55 bis 60 kg dieser Mischung, wobei man den Heizmantel des Reaktors auf der Eintragseite im ersten Drittel bei einer Temperatur von 250 bis 260°C hält, während die restlichen zwei Drittel mit Heizmedium von 420 bis 460°C beschickt werden. Man erhält eine PNC-Verbindung, die sich zur flammhemmenden Ausrüstung von thermoplastischen Formmassen, wie Polyamid, gemäss DE-A-2640120, besonders eignet.

## Beispiel 6

In einem Laborreaktor (Troglänge 80 cm), dessen Heizmantel im vorderen Teil bei 250°C und im hinteren Teil am Austragstutzen bei 500°C gehalten wird, werden stündlich 5 kg einer Mischung aus 35 Gewichtsprozent Borsäure und 65 Gewichtsprozent Ammoniumorthophosphat eingetragen. Das gebildete Borphosphat verlässt den Reaktor mit einer Temperatur von 410 bis 420°C und besitzt einen wasserlöslichen Anteil der unter 2% liegt. Bei Verwendung eines grösseren Reaktors, wie er in Beispiel 1 beschrieben ist, kann man auf die Zubereitung einer Vormischung verzichten und über getrennte Dosiereinrichtungen gleichzeitig Borsäure und Monoammoniumphosphat im Gewichtsverhältnis von 30:65 eintragen, wobei die pro Stunde durchsetzbare Menge ungefähr 60 kg beträgt.

## Beispiel 7

In einem Reaktor mit einer Troglänge von 320 cm, dessen Mantel mit einer Salzschmelze auf 340 bis 370°C beschickt wird, trägt man über eine Schnecke 42,05 kg Melamin/h ein. Gleichzeitig wird mittels einer Kolbenpumpe über ein Rohr mit vier Düsen 43,55 kg 75prozentige Phosphorsäure/h zudosiert. Der gebildete Wasserdampf verlässt den Reaktor über zwei Gasabgangsstutzen. Die Heiztemperatur ist so einzustellen, dass das gebildete Melamindiphosphat vor Verlassen des Reaktors eine Temperatur von 265 bis 275°C besitzt.

Zur Herstellung von Melamin-polyphosphat kondensiert man in einem zweiten Reaktionsschritt das Melamin-diphosphat mittels Harnstoff. Der Reaktor wird hierzu im ersten Drittel auf einer Manteltemperatur von 180°C gehalten, während der Rest des Heizmantels mit einer Salzschmelze beaufschlagt wird, die im Vorlauf eine Temperatur von 380°C besitzt. Mittels Dosierrinne trägt man eine Mischung von 107 kg Melamin-diphosphat und 15,5 kg Harnstoff/h ein, wobei die Drehzahl der Reaktorwelle 10 bis 12 U/min betragen sollte.

## Beispiel 8

Der in Beispiel 1 beschriebene Reaktor, der mit einer Salzschmelze mit einer Vorlauftemperatur von 440°C beheizt ist, wird mit 120 kg Aluminiumtripolyphosphat gefüllt. Sobald die Füllung eine Temperatur von 380°C erreicht hat, beginnt man mit dem Eindüsen einer 80 bis 90°C heissen Aluminium-orthophosphatlösung, die man aus Aluminium-oxyhydrat und 75prozentiger Phosphorsäure bei 80 bis 90°C bereitet. Die über eine Kolbenpumpe eingetragene Menge an Orthophosphatlösung wird so dosiert, dass sich am Austrag eine Produkttemperatur von 370 bis 380°C einstellt. Das erhaltene Aluminium-phosphat zeigte bei 600°C einen Glühverlust von 6,5%.

Zur Herstellung von Aluminium-metaphosphat verfährt man in ähnlicher Weise, stellt jedoch eine Heiztemperatur von 540°C und eine Produkttemperatur von 460°C ein.

## Beispiel 9

Der oben beschriebene Laborreaktor wird bei einer Heizbadtemperatur von 160°C bei einer Drehzahl der Welle von 12 U/min langsam mit 10,0 kg Zinkpolyphosphat beschickt. Anschliessend steigert man die Temperatur des Heizmediums in der dem Eintrag zugewandten Zone auf 250°C und in den beiden übrigen dem Austrag zugewandten Zonen auf 450°C und dosiert stündlich 6 bis 8 kg einer Lösung von Zinkorthophosphat $Zn(H_2PO_4)_2$ zu, die durch Eintragen von Zinkoxid in heisse 75prozentige Phosphorsäure gewonnen wurde.

**Patentansprüche**

1. Verfahren zur Kondensation von Feststoffen, mit Ausnahme von Cyanursäuren, insbesondere von Phosphaten, die während der Kondensation zum Sintern und/oder Verkleben neigen, in einem Reaktor unter Wärmezufuhr von aussen, dadurch gekennzeichnet, dass in der ersten Phase das im Reaktorgehäuse befindliche gemischte Material in dünner Schicht an die beheizte Reaktorgehäusewand angedrückt wird und dass nachfolgend das aufgeheizte und teilkondensierte Material von den Wänden des Reaktors abgeschabt und mit dem im Innern des Reaktors befindlichen Produkt vermischt wird.

2. Verfahren nach Anspruch 1, dadurch gekennzeichnet, dass die Wärme mittels einer Schmelze durch die Reaktorwandung der kondensierten Schicht und durch Abschälen der kondensierten Schicht dem Innern des Reaktors zugeführt wird.

0015006

3. Verfahren nach Anspruch 1 bis 2, dadurch gekennzeichnet, dass man als Wärmeüberträger eine Salzschmelze oder Metallschmelze verwendet.

4. Verfahren nach Anspruch 1 bis 3, dadurch gekennzeichnet, dass man über die Länge des Reaktors unterschiedliche Wärmemengen zuführt.

5. Verfahren nach Anspruch 1 bis 4, dadurch gekennzeichnet, dass man die Reaktionsabgase absaugt, mit Luft verdünnt, das durch die Abgase mitgeführte Produkt abscheidet und gegebenenfalls in den Reaktor zurückführt.

6. Vorrichtung zur Durchführung des Verfahrens nach Anspruch 1 bis 5, bestehend aus einem beheizbaren Reaktorgehäuse (1) mit innenliegendem sternförmigen Mischwerkzeug mit Paddeln (3), dadurch gekennzeichnet, dass mindestens ein Paddel (3) durch ein Schälmesser (11) ersetzt ist, das in geringem Abstand von der Reaktorgehäusewand angeordnet ist.

7. Vorrichtung nach Anspruch 6, dadurch gekennzeichnet, dass das Reaktorgehäuse (1) trogförmig ausgebildet ist und an Querträgern (14) in Längsrichtung frei beweglich aufgehängt ist, wobei sich die Querträger (14) über Gleitlager (15) auf Längsträgern (13) abstützen.

8. Vorrichtung nach Anspruch 6 bis 7, dadurch gekennzeichnet, dass über die Länge des Reaktors mehrere separate Heiztaschen (12) angeordnet sind.

9. Vorrichtung nach Anspruch 6 bis 8, dadurch gekennzeichnet, dass an der Unterseite des Reaktorgehäuses (1) mindestens ein Widerlager (16), bestehend aus zwei Teilen (16a und 16b) angeordnet ist, deren eines (16a) am Gehäuse und deren anderes (16b) an der Tragkonstruktion (17) befestigt ist, wobei die beiden Teile (16a und 16b) in Längsrichtung gegeneinander verschiebbar sind.

10. Vorrichtung nach Anspruch 6 bis 9, dadurch gekennzeichnet, dass eine oder mehrere mit dem Gasraum des Reaktors verbundene Absaugvorrichtungen (20) angeordnet sind, die Absaugventilatoren sowie Regler für atmosphärische Zugluft und Reaktionsabgase aufweisen.

**Claims**

1. A process for the condensation of solids, with the exception of cyanuric acids, in particular phosphates, which tend to sinter and/or to stick together during the condensation, in a reactor with a heat supply from the outside, charcterized in that in the first phase the mixed material present in the reactor housing is pressed in a thin layer on to the heated wall of the reactor housing and subsequently the heated and partially condensed material is scraped off the walls of the reactor and is mixed with the product present in the interior of the reactor.

2. A process according to Claim 1, characterized in that the heat is supplied to the condensed layer through the reactor wall by means of a melt and to the interior of the reactor by peeling off the condensed layer.

3. A process according to Claims 1 and 2, characterized in that a salt melt or metallic melt is used as the heat carrier.

4. A process according to Claims 1 to 3, characterized in that different quantities of heat are supplied over the lenght of the reactor.

5. A process according to Claims 1 to 4, characterized in that the waste reaction gases are sucked away and are rarefied with air, and the product conveyed along with the waste gases is separated and where appropriate fed back into the reactor.

6. An apparatus for performing the process according to Claims 1 to 5, comprising a heatable reactor housing (1) having an enclosed star-shaped mixer with paddles (3), characterized in that at least one paddle (3) is replaced by a peeling knife (11) which is disposed at a slight distance from the wall of the reactor housing.

7. An apparatus according to Claim 6, characterized in that the reactor housing (1) is made in the form of a through and is suspended freely displaceably in the longitudinal direction on cross-members (14), the cross-members (14) being supported on longitudinal members (13) by way of slide bearings (15).

8. An apparatus according to Claims 6 and 7, characterized in that a plurality of separate heating pockets (12) are disposed over the length of the reactor.

9. An apparatus according to Claims 6 to 8, characterized in that on the underside of the reactor housing (1) is disposed at least one abutment (16) comprising two parts (16a and 16b), one (16a) of which is secured to the housing and the other (16b) of which is secured to the support structure (17), both of the parts (16a and 16b) being displaceable relative to one another in the longitudinal direction.

10. An apparatus according to Claims 6 to 9, characterized in that one or more suction devices (20) are provided which are connected to the gas chamber of the reactor and which comprise suction valves and regulators for atmospheric draught and waste reaction gases.

**Revendications**

1. Procédé pour condenser des corps solides autres que des acides cyanuriques, plus particulièrement des phosphates, qui ont tendance à s'agglomérer et/ou à coller lors de la condensation, dans un réacteur, avec apport de chaleur de l'extérieur, procédé caractérisé en ce que, dans une première étape, on comprime contre la paroi chauffée du boîtier du réacteur la matière mélangée qui se trouve dans le boîtier du réacteur de manière à en faire une couche mince, et en ce qu'on détache ensuite des parois du réacteur, par raclage, la matière chauffée et partiellement condensée et on la mélange avec le produit qui se trouve à l'intérieur du réacteur.

2. Procédé selon la revendication 1, caractérisé en ce que la chaleur est fournie à la couche condensée par la paroi du réacteur au moyen d'une masse fondue, et à l'intérieur du réacteur par raclage de la couche condensée.

3. Procédé selon l'une des revendications 1 et 2, caractérisé en ce qu'on utilise, comme caloporteur, une masse saline fondue ou une masse métallique fondue.

4. Procédé selon l'une quelconque des revendications 1 à 3, caractérisé en ce qu'on apporte des quantités de chaleur qui varient le long du réacteur.

5. Procédé selon l'une quelconque des revendications 1 à 4, caractérisé en ce qu'on aspire les gaz usés provenant de la réaction, on les dilue par de l'air, on fait précipiter le produit entraîné par les gaz usés et on le renvoie éventuellement au réacteur.

6. Appareil pour exécuter le procédé selon l'une quelconque des revendications 1 à 5, appareil qui est constitué d'un boîtier de réacteur chauffable (1) équipé, en son intérieur, d'un orange mélangeur stelliforme porteur de palettes (3) et qui est caractérisé en ce qu'au moins une palette (3) est remplacée par un couteau racleur (11) qui est placé à une faible distance de la paroi du boîtier du réacteur.

7. Appareil selon la revendication 6 caractérisé en ce que le boîtier (1) du réacteur a la forme d'une auge et est suspendu, à mouvement libre dans la direction longitudinale, à des traverses (14) qui prennent appui, par des paliers à glissement (15), sur des longerons (13).

8. Appareil selon l'une des revendications 6 et 7, caractérisé en ce que plusieurs poches chauffantes (12) sont disposées le long du réacteur.

9. Appareil selon l'une quelconque des revendications 6 à 8, caractérisé en ce qu'à la partie inférieure du boîtier (1) du réacteur est placée au moins une butée (16) constituée de deux parties (16a et 16b) dont l'une (16a) est fixée au boîtier et l'autre (16b) à la charpente (17), les deux parties (16a, 16b) pouvant coulisser longitudinalement l'une contre l'autre.

10. Appareil selon l'une quelconque des revendications 6 à 9, caractérisé en ce qu'il est équipé d'un ou plusieurs dispositifs d'aspiration (20) reliés à l'espace gazeux du réacteur, dispositifs qui comportent des ventilateurs aspirants ainsi que des régulateurs pour le courant d'air atmosphérique et les gaz usés de la réaction.

F I G . 1

# F I G . 2

# F I G. 3